# EUROPEAN PATENT APPLICATION

(11) **EP 4 350 811 A1**
(43) Date of publication of application: **10.04.2024**
(21) Application number: 22891564.1
(22) Date of filing: 22.08.2022
(51) Int. Cl.: H01M 4/525, H01M 4/505, H01M 4/485, H01M 10/0525

(54) **LITHIUM TRANSITION METAL COMPOSITE OXIDE, ELECTROCHEMICAL DEVICE AND ELECTRONIC DEVICE**

(30) Priority: 11.11.2021 CN 202111333551
(71) Applicant: Ningde Amperex Technology Limited, Zhangwan Town, Jiaocheng District Ningde City Fujian 352100 (CN)
(72) Inventor: WANG, Kai, Ningde City, Fujian 352100 (CN)
(74) Representative: Icosa
(86) International application number: PCT/CN2022/113859
(87) International publication number: WO 2023/082757

(57) **Abstract**

This application provides a lithium transition metal composite oxide, an electrochemical device, and an electronic device. The lithium transition metal composite oxidehas a twin crystal structure. The twin crystal structure includes a first crystalline region and a second crystalline region. A grain boundary exists between the first crystalline region and the second crystalline region. The first crystalline region includes a first region located within 20 nm from the grain boundary. The second crystalline region includes a second region located within 20 nm from the grain boundary. An angle between a transition metal layer in the first region and a transition metal layer in the second region is 65° to 80°. By adjusting the angle between the transition metal layer in the first region and the transition metal layer in the second region to fall within 65° to 80°, it can improve stability of the twin crystal structure, and in turn, improve the cycle performance of the electrochemical device at a high voltage.

## Description

This application claims priority to Chinese Patent Application No. 202111333551.6, filed with the Chinese Patent Office on November 11, 2021 and entitled "LITHIUM TRANSITION METAL COMPOSITE OXIDE, ELECTROCHEMICAL DEVICE, AND ELECTRONIC DEVICE", which is incorporated herein by reference in its entirety.

### TECHNICAL FIELD

This application relates to the technical field of electrochemistry, and in particular, to a lithium transition metal composite oxide, an electrochemical device, and an electronic device.

### BACKGROUND

By virtue of the advantages of a high energy storage density, a high open circuit voltage, a low self-discharge rate, a long cycle life, and high safety, lithium-ion batteries are widely used in various fields such as portable electric energy storage, electronic devices, and electric vehicles. However, this imposes higher requirements on comprehensive performance of the lithium-ion batteries, such as high cycle performance at high voltages (for example, a voltage higher than 4.2 V).

### SUMMARY

An objective of this application is to provide a lithium transition metal composite oxide, an electrochemical device, and an electronic device to improve cycle performance of the electrochemical device at a high voltage.

A first aspect of this application provides a lithium transition metal composite oxide. The lithium transition metal composite oxide has a twin crystal structure. The twin crystal structure includes a first crystalline region and a second crystalline region. A grain boundary exists between the first crystalline region and the second crystalline region. The first crystalline region includes a first region located within 20 nm from the grain boundary. The second crystalline region includes a second region located within 20 nm from the grain boundary. An angle between a transition metal layer in the first region and a transition metal layer in the second region is 65° to 80°. By adjusting the angle between the transition metal layer in the first region and the transition metal layer in the second region to fall within 65° to 80°, it can reduce the stress and strain between the first crystalline region and the second crystalline region during charge-and-discharge processes, improve stability of the twin crystal structure, and in turn, improve the cycle performance of the electrochemical device at a high voltage.

In some embodiments of this application, the transition metal layer in the first region includes at least one of Co, Mn or Ni. In some embodiments of this application, the transition metal layer in the second region includes at least one of Co, Mn or Ni. The main body of the first region and the main body of the second region are both layered oxide materials containing Co, Ni or Mn, and they will fuse with each other and grow into a twin crystal boundary under the action of a high temperature. The first region and the second region each include the foregoing transition metal elements, and each take on a layered structure. The two regions are connected by twinning, which is a connection manner with the lowest energy, thereby improving stability of the structure.

In some embodiments of this application, the grain boundary contains an element A. The element A includes at least one of Mg, Al, Ti, Zr, La, Nb, Hf, Zn, Y or F. With the grain boundary containing the element A, the grain boundary between the first crystalline region and the second crystalline region is refined, the stability of the grain boundary structure is improved, and the risk of cracking of the twin crystal structure is reduced.

In some embodiments of this application, the first region includes a third region located within 10 nm from the grain boundary and a fourth region located within 10 nm to 20 nm from the grain boundary. Based on a total molar numbers of Co, Mn, and Ni in the third region, a molar percent of the element A in the third region is X. Based on a total molar numbers of Co, Mn, and Ni in the fourth region, the molar percent of the element A in the fourth region is Y, and satisfying: X/Y ≥ 2. In this way, the structural stability at a position close to the grain boundary in the first crystalline region is further improved, the risk of cracking of the twin crystal structure is further reduced, and in turn, the structural stability of the lithium transition metal composite oxide at a high voltage is improved.

In some embodiments of this application, X is 0.2% to 2.5%. This further ensures the structural stability at the position close to the grain boundary in the first crystalline region.

In some embodiments of this application, in a cross section of the lithium transition metal composite oxide, an area percent of the second crystalline region is 30% to 60% based on an area of the cross section. By adjusting the area percent of the second crystalline region to fall within the range specified above, it is beneficial to improve the rate performance and cycle performance of the electrochemical device.

In some embodiments of this application, the lithium transition metal composite oxide includes a substrate and a first layer located on a surface of the substrate. The first layer includes a metal fluoride. The first layer that includes the metal fluoride suppresses side reactions occurring between the surface of the substrate and the electrolytic solution, improves the stability of the surface structure of the lithium transition metal composite oxide, and in turn, improves the cycle performance of the electrochemical device.

In some embodiments of this application, the lithium transition metal composite oxide satisfies at least one of the following features: (a) the metal fluoride includes at least one of CoF₂, CoF₃, CoFO, MgF₂, NaF or AlF₃; and (b) a thickness of the first layer is 1 nm to 8 nm. When the lithium transition metal composite oxide satisfies at least one of the features (a) to (b), the cycle performance of the electrochemical device is improved.

A second aspect of this application provides an electrochemical device. The electrochemical device includes a positive electrode plate. The positive electrode plate includes a positive material layer. The positive material layer includes a positive active material. The positive active material includes the lithium transition metal composite oxide according to any one of the embodiments described above.

In some embodiments of this application, the positive electrode plate is obtained by disassembling the electrochemical device that is fully discharged, a 1.4-cm diameter disk is taken from the positive electrode plate, the disk is assembled with lithium metal to form a button battery, and the button battery is charged until a voltage reaches 4.7 V, where the angle β in the lithium transition metal composite oxide is 70° to 86°.

In some embodiments of this application, the positive electrode plate is obtained by disassembling the electrochemical device that is fully discharged, two 1.4-cm diameter disks are taken from the positive electrode plate, the two disks are assembled with lithium metal to form a first button battery and a second button battery respectively, the first button battery is charged until a voltage reaches 4.5 V, and the second button battery is charged until the voltage reaches 4.7 V In the lithium transition metal composite oxide of the first button battery, an angle between the transition metal layer in the first region and the transition metal layer in the second region is α. In the lithium transition metal composite oxide of the second button battery, the angle between the transition metal layer in the first region and the transition metal layer in the second region is β, and satisfying: |β - α| ≤ 5°. When the electrochemical device satisfies the foregoing feature, the strain between the first region and the second region of the lithium transition metal composite oxide is relatively low during charge-and-discharge processes, and the stability of the twin crystal structure is relatively high.

In some embodiments of this application, based on a number of particles of the positive active material, a number percent of the particles with a twin crystal structure in the positive active material is 35% to 75%. By controlling the number percent of the particles with a twin crystal structure in the positive active material to fall within the range specified above, it is beneficial to improve the rate performance and cycle performance of the electrochemical device.

In some embodiments of this application, the electrochemical device further includes an electrolytic solution. The electrolytic solution includes a fluorocarbonate compound. Based on a mass of the electrolytic solution, a mass percent of the fluorocarbonate compound is 0.05% to 15%. The introduced fluorocarbonate compound can form a protection layer at an interface of cracking of the twin crystal structure, reduce the side reactions occurring between the lithium transition metal composite oxide and the electrolytic solution, and in turn, improve the cycle performance of the electrochemical device.

In some embodiments of this application, the fluorocarbonate compound includes at least one of monofluoroethylene carbonate, difluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene carbonate, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate.

A third aspect of this application provides an electronic device. The electronic device includes the electrochemical device according to any one of the embodiments described above.

This application provides a lithium transition metal composite oxide, an electrochemical device, and an electronic device. The lithium transition metal composite oxide has a twin crystal structure. The twin crystal structure includes a first crystalline region and a second crystalline region. A grain boundary exists between the first crystalline region and the second crystalline region. The first crystalline region includes a first region located within 20 nm from the grain boundary. The second crystalline region includes a second region located within 20 nm from the grain boundary. An angle between a transition metal layer in the first region and a transition metal layer in the second region is 65° to 80°. By adjusting the angle between the first region and the second region to fall within 65° to 80°, it can improve stability of the twin crystal structure, and in turn, improve the cycle performance of the electrochemical device at a high voltage.

### BRIEF DESCRIPTION OF DRAWINGS

To describe the technical solutions in the embodiments of this application or the prior art more clearly, the following outlines the drawings to be used in the embodiments of this application or the prior art. Evidently, the drawings outlined below merely illustrate some embodiments of this application, and a person of ordinary skill in the art may derive other drawings from such drawings without making any creative effort.
FIG. 1 is a scanning electron microscope image of a cross section of a positive electrode plate according to Embodiment 1-1;
FIG. 2 is a scanning electron microscope image of a lithium transition metal composite oxide with a twin crystal structure in a cross section of a positive electrode plate according to Embodiment 1-1;
FIG. 3 is a transmission electron microscope image of a lithium transition metal composite oxide obtained by charging a button battery until a voltage of 4.7 V, where the button battery is prepared by assembling lithium metal with a positive electrode plate obtained by disassembling an electrochemical device that is fully discharged according to Embodiment 1-1; and
FIG. 4 shows a curve of a capacity retention rate varying with the number of cycles of an electrochemical device according to Embodiment 1-1 and Comparative Embodiment 1-1.

### DETAILED DESCRIPTION OF EMBODIMENTS

To make the objectives, technical solutions, and advantages of this application clearer, the following describes this application in more detail with reference to drawings and embodiments. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that in specific embodiments of this application, this application is construed by using a lithium-ion battery as an example of the electrochemical device, but the electrochemical device according to this application is not limited to the lithium-ion battery.

Through research, the applicant of this application finds that, in a positive active material with a twin crystal structure, such as lithium cobalt oxide, the twin crystal structure can provide multi-directional migration paths for lithium ions, thereby improving the rate performance of the electrochemical device. However, the twin crystal structure is unstable at a high voltage. Especially at the grain boundary, the twin crystal structure is prone to crack to result in side reactions between the material and the electrolytic solution, thereby impairing the cycle performance of the electrochemical device, and making it difficult to meet the requirements in practical applications.

A first aspect of this application provides a lithium transition metal composite oxide. The lithium transition metal composite oxide has a twin crystal structure. The twin crystal structure includes a first crystalline region and a second crystalline region. A grain boundary exists between the first crystalline region and the second crystalline region. The first crystalline region includes a first region located within 20 nm from the grain boundary. The second crystalline region includes a second region located within 20 nm from the grain boundary. An angle between a transition metal layer in the first region and a transition metal layer in the second region is 65° to 80°. For example, the angle may be 65°, 70°, 75°, 80°, or any range formed by any two thereof. The lithium transition metal composite oxide can be used as a positive active material in an electrochemical device. As found by the applicant of this application, by adjusting the angle between the first region and the second region to fall within 65° to 80°, it can reduce the stress and strain between the first crystalline region and the second crystalline region during charge-and-discharge processes, improve stability of the twin crystal structure, and in turn, improve the cycle performance of the electrochemical device at a high voltage. In this application, the first crystalline region means a region in which the transition metal layer in the crystal structure possesses the same orientation on a side of the twin crystal grain boundary, and the second crystalline region means a region in which the transition metal layer in the crystal structure possesses the same orientation on the other side of the twin crystal grain boundary that is different from the side where the first crystal region is located. The angle means an angle formed between the orientation of the transition metal layer in the first region and the orientation of the transition metal layer in the second region after the two orientations are extended until intersecting at the grain boundary. In addition, if the lithium transition metal composite oxide exists as a positive active material in the electrochemical device, the angle means an angle between the transition metal layer in the first region and the transition metal layer in the second region in the lithium transition metal composite oxide in a positive electrode plate, where the positive electrode plate is obtained by disassembling the electrochemical device that is fully discharged.

In some embodiments of this application, the transition metal layer in the first region includes at least one of Co, Mn or Ni. In some embodiments of this application, the transition metal layer in the second region includes at least one of Co, Mn or Ni. The transition metal layers in the first region and the second region both contain the transition metal, thereby improving interfacial compatibility between the first region and the second region, and in turn, improving the stability of the twin crystal structure.

In some embodiments of this application, the grain boundary contains an element A. The element A includes at least one of Mg, Al, Ti, Zr, La, Nb, Hf, Zn, Y or F. As found by the applicant of this application, with the grain boundary containing the element A, the grain boundary between the first crystalline region and the second crystalline region is refined, the stability of the grain boundary structure is improved, and the risk of cracking of the twin crystal structure is reduced. For example, when the element A contains Mg, the element O at the grain boundary may bind with Mg to form a Mg-O bond to improve stability of the O structure. For another example, when the element A contains F, a local disordered structure may be formed to disperse the stress, thereby reducing the risk of cracking of the twin crystal structure.

In some embodiments of this application, based on a total molar numbers of Co, Mn and Ni in the grain boundary, a molar percent of the element A in the grain boundary is 0.2% to 2.5%. For example, the molar percent of the element A may be 0.2%, 0.25%, 0.3%, 0.35%, 0.4%, 0.45%, 0.5%, 1.0%, 1.5%, 2.0%, 2.5%, or any range formed by any two thereof. By adjusting the molar percent of the element A to fall within the range specified above, it is beneficial to improve the stability of the grain boundary structure, and in turn, reduces the risk of cracking of the twin crystal structure, and improves the cycle performance of the electrochemical device at a high voltage.

In some embodiments of this application, the first region includes a third region located within 10 nm from the grain boundary and a fourth region located within 10 nm to 20 nm from the grain boundary. Based on a total molar numbers of Co, Mn and Ni in the third region, a molar percent of the element A in the third region is X. Based on a total molar numbers of Co, Mn and Ni in the fourth region, the molar percent of the element A in the fourth region is Y, and satisfying: X/Y ≥ 2, and preferably 2 ≤ X/Y ≤ 12. The value of X/Y may be 2, 3, 4, 5, 6, 7, 8, 9, 10, or any range formed by any two thereof.

In some embodiments of this application, X is 0.2% to 2.5%. For example, the value of X may be 0.2%, 0.25%, 0.3%, 0.35%, 0.4%, 0.45%, 0.5%, 1.0%, 1.5%, 2.0%, 2.5%, or any range formed by any two thereof. The value of X falling within the range of 0.2% to 2.5% further improves the structural stability at the position close to the grain boundary in the first crystalline region, reduces the risk of cracking of the twin crystal structure, and in turn, improves the structural stability of the lithium transition metal composite oxide at a high voltage. The value of Y is not particularly limited in this application, as long as the ratio of X to Y is greater than or equal to 2. For example, 0% < Y ≤ 1.0%.

In some embodiments of this application, in a cross section of the lithium transition metal composite oxide, an area percent of the second crystalline region is 30% to 60% based on an area of the cross section. For example, the area percent of the second crystalline region may be 30%, 35%, 40%, 45%, 50%, 55%, 60%, or any range formed by any two thereof. By adjusting the area percent of the second crystalline region to fall within the range specified above, it is beneficial to improve the rate performance and cycle performance of the electrochemical device.

In some embodiments of this application, the lithium transition metal composite oxide includes a substrate and a first layer located on a surface of the substrate. The first layer includes a metal fluoride. As found by the applicant of this application, when the lithium transition metal composite oxide includes the first layer and the first layer includes the metal fluoride, it can suppress side reactions occurring between the surface of the substrate and the electrolytic solution, improve the stability of the surface structure of the lithium transition metal composite oxide, and in turn, improve the cycle performance of the electrochemical device.

In some embodiments of this application, the metal fluoride includes at least one of CoF₂, CoF₃, CoFO, MgF₂, NaF or AlF₃.

In some embodiments of this application, a thickness of the first layer is 1 nm to 8 nm. For example, the thickness of the first layer may be 1 nm, 2 nm, 3 nm, 4 nm, 5 nm, 6 nm, 7 nm, 8 nm, or any range formed by any two thereof. By controlling the thickness of the first layer to fall within the range specified above, it is beneficial to improve the cycle performance and rate performance of the electrochemical device.

The preparation method of the lithium transition metal composite oxide is not particularly limited in this application, as long as the objectives of this application can be achieved. For example, a preparation method of the lithium transition metal composite oxide may include, but without being limited to, the following steps: mixing a transition metal source and a doping element source and configured to an aqueous solution, obtaining a precipitate by a co-precipitation method, and then performing a first calcination to the precipitate, and grinding and sifting the calcined product to obtain a first intermediate product; next, mixing the first intermediate product with a lithium source, and then performing a second calcination to the mixture, and grinding and sifting the calcined product to obtain a second intermediate product; subsequently, mixing the second intermediate product with the doping element source, and then performing a third calcination to the mixture, and grinding and sifting the calcined product to obtain a lithium transition metal composite oxide. The temperature T1 and duration t1 of the first calcination, the temperature T2 and duration t2 of the second calcination, and the temperature T3 and duration t3 of the third calcination are not particularly limited in this application, as long as the objectives of this application can be achieved. For example, T1 is 500 °C to 1000 °C, and t1 is 5 hours to 15 hours; T2 is 800 °C to 1500 °C, and t2 is 5 hours to 15 hours; and T3 is 500 °C to 1000 °C, and t3 is 5 hours to 15 hours.

The lithium transition metal composite oxide includes LiₓNi_{y}Co_{z}MnₖZ_{q}O_{2±a}Tₐ, where Z includes at least one of B, Mg, Al, Si, P, S, Ti, Cr, Fe, Cu, Zn, Ga, Y, Zr, Mo, Ag, W, In, Sn, Sb, La, Nb, Hf or Ce, T is halogen, 0.2 < x ≤ 1.2, 0 ≤ y ≤ 1, 0 ≤ z ≤ 1, 0 ≤ k ≤ 1, 0 ≤ q ≤ 1, y, z and k are not 0 simultaneously, and 0 ≤ a ≤ 1.

A second aspect of this application provides an electrochemical device. The electrochemical device includes a positive electrode plate. The positive electrode plate includes a positive material layer. The positive material layer includes a positive active material. The positive active material includes the lithium transition metal composite oxide according to any one of the embodiments described above. The lithium transition metal composite oxide according to this application exhibits high structural stability, so that the electrochemical device according to this application achieves high cycle performance.

In some embodiments of this application, the positive electrode plate is obtained by disassembling the electrochemical device that is fully discharged, a 1.4-cm diameter disk is taken from the positive electrode plate, the disk is assembled with lithium metal to form a button battery, and the button battery is charged until a voltage reaches 4.7 V, where the angle β in the lithium transition metal composite oxide is 70° to 86°. For example, the angle in the lithium transition metal composite oxide is 70°, 72°, 75°, 78°, 80°, 82°, 85°, 86°, or any range formed by any two thereof. When charging until a voltage of 4.7 V, if the angle in the lithium transition metal composite oxide falls within the range specified above, it indicates that the angle between the transition metal layer in the first region and the transition metal layer in the second region changes relatively small at a high voltage, thereby improving the stability of the twin crystal structure, and in turn, improving the cycle performance of the electrochemical device at a high voltage.

In some embodiments of this application, the positive electrode plate is obtained by disassembling the electrochemical device that is fully discharged, two 1.4-cm diameter disks are taken from the positive electrode plate, the two disks are assembled with lithium metal to form a first button battery and a second button battery respectively, the first button battery is charged until a voltage reaches 4.5 V, and the second button battery is charged until the voltage reaches 4.7 V In the lithium transition metal composite oxide of the first button battery, an angle between the transition metal layer in the first region and the transition metal layer in the second region is α. In the lithium transition metal composite oxide of the second button battery, the angle between the transition metal layer in the first region and the transition metal layer in the second region is β, satisfying: |β - α| ≤ 5°. When the angles satisfy such a relation, it indicates that, in a high-voltage section of a charge-and-discharge process, the strain between the first region and the second region of the lithium transition metal composite oxide is relatively low, and the twin crystal structure possesses relatively high stability. For example, |β - α| may be 0.1°, 0.5°, 1°, 2°, 3°, 4°, 5°, or any range formed by any two thereof. The assembling method of the button battery is not particularly limited in this application, and may be an assembling method known in the art.

In some embodiments of this application, based on a number of particles of the positive active material, a number percent of the particles with a twin crystal structure in the positive active material is 35% to 75%. For example, the number percent of the particles with a twin crystal structure in the positive active material is 35%, 40%, 45%, 50%, 55%, 60%, 65%, 70%, 75%, or any range formed by any two thereof. By controlling the number percent of the particles with a twin crystal structure in the positive active material to fall within the range specified above, it is beneficial to improve the rate performance and cycle performance of the electrochemical device.

In some embodiments of this application, the positive active material may further include a positive active material known in the art, for example, may include, but without being limited to, at least one of lithium nickel cobalt manganese oxide, lithium nickel cobalt aluminum oxide, lithium iron phosphate, lithium cobalt oxide, lithium manganese oxide, or lithium manganese iron phosphate.

In some embodiments of this application, the electrochemical device includes an electrolytic solution. The electrolytic solution includes a fluorocarbonate compound. Based on a mass of the electrolytic solution, a mass percent of the fluorocarbonate compound is 0.05% to 15%. For example, the mass percent of the fluorocarbonate compound may be 0.05%, 0.5%, 1%, 5%, 10%, 15%, or any range formed by any two thereof. As found by the applicant of this application, the introduced fluorocarbonate compound can form a protection layer at an interface of cracking of the twin crystal structure, reduce the side reactions occurring between the lithium transition metal composite oxide and the electrolytic solution, and in turn, improve the cycle performance of the electrochemical device.

In some embodiments of this application, the fluorocarbonate compound includes at least one of monofluoroethylene carbonate, difluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene carbonate, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate.

In some embodiments of this application, the positive material layer includes a binder. In some embodiments of this application, the binder may include, but without being limited to, at least one of polypropylene alcohol, sodium polyacrylate, potassium polyacrylate, lithium polyacrylate, polyimide, polyamide imide, styrene butadiene rubber (SBR), polyvinyl alcohol (PVA), polyvinylidene fluoride, polyvinylidene difluoride (PVDF), polytetrafluoroethylene (PTFE), polyvinyl butyral (PVB), water-based acrylic resin, carboxymethyl cellulose (CMC), or sodium carboxymethyl cellulose (CMC-Na).

The positive electrode plate generally includes a positive current collector. The positive current collector is not particularly limited in this application, as long as the objectives of this application can be achieved. For example, the positive current collector may include, but without being limited to, an aluminum foil, an aluminum alloy foil, a composite current collector, or the like. The thickness of the positive current collector is not particularly limited in this application, as long as the objectives of this application can be achieved. For example, the thickness is 8 µm to 12 µm. In this application, the positive material layer may be disposed on one surface or both surfaces of the positive current collector in a thickness direction. It is hereby noted that the "surface" here may be the entire region of the positive current collector, or a partial region of the positive current collector, without being particularly limited in this application, as long as the objectives of the application can be achieved.

In this application, the positive material layer may further include a conductive agent. The conductive agent is not particularly limited in this application, as long as the objectives of this application can be achieved. For example, the conductive agent may include, but without being limited to, at least one of conductive carbon black (Super P), carbon nanotubes (CNTs), carbon fibers, flake graphite, Ketjen black, graphene, a metal material, or a conductive polymer. The carbon nanotubes may include, but without being limited to, single-walled carbon nanotubes and/or multi-walled carbon nanotubes. The carbon fibers may include, but without being limited to, vapor grown carbon fibers (VGCF) and/or carbon nanofibers. The metal material may include, but without being limited to, metal powder and/or metal fibers. Specifically, the metal may include, but without being limited to at least one of copper, nickel, aluminum, or silver. The conductive polymer may include, but without being limited to, at least one of polyphenylene derivatives, polyaniline, polythiophene, polyacetylene, or polypyrrole.

Optionally, the positive electrode may further include a conductive layer. The conductive layer is located between the positive current collector and the positive material layer. The components of the conductive layer are not particularly limited in this application, and may be a conductive layer commonly used in the art. For example, the conductive layer may include, but without being limited to, the foregoing conductive agent and binder.

The electrochemical device according to this application further includes a negative electrode plate. The negative electrode plate generally includes a negative current collector and a negative material layer disposed on a surface of the negative current collector. The negative current collector is not particularly limited in this application, as long as the objectives of this application can be achieved. For example, the negative current collector may include, but without being limited to, a copper foil, a copper alloy foil, a nickel foil, a stainless steel foil, a titanium foil, foamed nickel, foamed copper, a composite current collector, or the like. The thickness of the negative current collector is not particularly limited in this application, as long as the objectives of this application can be achieved. For example, the thickness is 4 µm to 12 µm. In this application, the negative material layer may be disposed on one surface or both surfaces of the negative current collector along the thickness direction. It is hereby noted that the "surface" here may be the entire region of the negative current collector, or a partial region of the negative current collector, without being particularly limited in this application, as long as the objectives of the application can be achieved.

In this application, the negative material layer includes a negative active material. The negative active material is not particularly limited, as long as the objectives of this application can be achieved. For example, the negative active material may include, but without being limited to, at least one of natural graphite, artificial graphite, mesocarbon microbeads, hard carbon, soft carbon, silicon, a silicon-carbon composite, a Li-Sn alloy, a Li-Sn-O alloy, Sn, SnO, SnO₂, spinel-structured lithiated TiO₂-Li₄Ti₅O₁₂, or a Li-Al alloy.

In this application, the negative material layer may further include a conductive agent. The conductive agent is not particularly limited in this application, as long as the objectives of this application can be achieved. For example, the conductive agent may include, but without being limited to, at least one of the foregoing conductive agents.

In this application, the negative material layer may further include a binder. The binder is not particularly limited in this application, as long as the objectives of this application can be achieved. For example, the binder may include, but without being limited to, at least one of the foregoing binders.

Optionally, the negative electrode plate may further include a conductive layer. The conductive layer is located between the negative current collector and the negative material layer. The components of the conductive layer are not particularly limited in this application, and may be a conductive layer commonly used in the art. The conductive layer may include, but without being limited to, the foregoing conductive agent and binder.

The electrochemical device according to this application further includes a separator. The separator is not particularly limited in this application, as long as the objectives of this application can be achieved. For example, the separator may include, but without being limited to, at least one of polyethylene (PE)-based, polypropylene (PP)-based, or polytetrafluoroethylene-based polyolefin (PO) separator, a polyester film (such as polyethylene terephthalate (PET) film), a cellulose film, a polyimide film (PI), a polyamide film (PA), a spandex or aramid film, a woven film, a non-woven film (non-woven fabric), a microporous film, a composite film, separator paper, a laminated film, or a spinning film, and preferably PP. The separator according to this application may be a porous structure. The pore size of the separator is not particularly limited, as long as the objectives of this application can be achieved. For example, the pore size may be 0.01 µm to 1 µm. The thickness of the separator is not particularly limited in this application, as long as the objectives of this application can be achieved. For example, the thickness may be 5 µm to 500 µm.

For example, the separator may include a substrate layer and a surface treatment layer. The substrate layer may be a non-woven fabric, film or composite film, which, in each case, is porous. The material of the substrate layer may include, but without being limited to, at least one of polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer. The surface treatment layer may be a polymer layer or an inorganic compound layer, or a layer formed by mixing a polymer and an inorganic compound.

The inorganic compound layer may include, but without being limited to, inorganic particles and an inorganic compound layer binder. The inorganic particles are not particularly limited in this application as long as the objectives of this application can be achieved, and may include, but without being limited to, at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The inorganic compound layer binder is not particularly limited in this application, and may include, but without being limited to, at least one of polyvinylidene difluoride, poly(vinylidene difluoride-co-hexafluoropropylene), polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer, and the material of the polymer may include, but without being limited to, at least one of polyamide, polyacrylonitrile, acrylate polymer, polyacrylic acid, polyacrylate, polyvinylpyrrolidone, polyvinyl ether, polyvinylidene difluoride, or poly(vinylidene difluoride-co-hexafluoropropylene).

In this application, the electrolytic solution may further include a nonaqueous solvent and a lithium salt. The nonaqueous solvent is not particularly limited in this application, as long as the objectives of this application can be achieved. For example, the nonaqueous solvent may include, but without being limited to, at least one of a carbonate compound, a carboxylate compound, an ether compound, or other organic solvents. The carbonate compound may include, but without being limited to, at least one of a chain carbonate compound or a cyclic carbonate compound. The chain carbonate compound may include, but without being limited to, at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). The cyclic carbonate compound may include, but without being limited to, at least one of ethylene carbonate (EC), vinylene carbonate (VC), propylene carbonate (PC), butylene carbonate (BC), or vinyl ethylene carbonate (VEC). The carboxylate compound may include, but without being limited to, at least one of methyl formate, methyl acetate, ethyl acetate, n-propyl acetate, tert-butyl acetate, methyl propionate, ethyl propionate, propyl propionate, γ-butyrolactone, decanolactone, valerolactone, mevalonolactone, or caprolactone. The ether compound may include, but without being limited to, at least one of dibutyl ether, tetraglyme, diglyme, 1,2-dimethoxyethane, 1,2-diethoxyethane, ethoxymethoxyethane, 2-methyltetrahydrofuran, or tetrahydrofuran. The other organic solvent may include, but without being limited to, at least one of dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or phosphate ester.

The lithium salt is not particularly limited in this application, as long as the objectives of this application can be achieved. For example, the lithium salt may include, but without being limited to, at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. Preferably, the lithium salt includes LiPF₆.

The electrochemical device in this application is not particularly limited, and may be any device in which an electrochemical reaction occurs. In some embodiments, the electrochemical device may include, but without being limited to, a lithium metal secondary battery, a lithium-ion secondary battery (lithium-ion battery), a lithium polymer secondary battery, a lithium-ion polymer secondary battery, or the like.

The process of preparing the electrochemical device is well known to a person skilled in the art, and is not particularly limited in this application. For example, the preparation process may include, but without being limited to, the following steps: stacking the positive electrode plate, the separator, and the negative electrode plate in sequence, and performing operations such as winding and folding as required to obtain a jelly-roll electrode assembly; putting the electrode assembly into a package, injecting the electrolytic solution into the package, and sealing the package to obtain an electrochemical device; or, stacking the positive electrode plate, the separator, and the negative electrode plate in sequence, and then fixing the four corners of the entire stacked structure by use of adhesive tape to obtain a stacked-type electrode assembly, putting the electrode assembly into a package, injecting the electrolytic solution into the package, and sealing the package to obtain an electrochemical device. In addition, an overcurrent prevention element, a guide plate, and the like may be placed into the package as required, so as to prevent the rise of internal pressure, overcharge, and overdischarge of the electrochemical device.

A third aspect of this application provides an electronic device. The electronic device includes the electrochemical device according to any one of the embodiments described above. The electrochemical device according to this application achieves high cycle performance, so that the electronic device according to this application achieves a relatively long lifespan.

The electronic device according to this application is not particularly limited, and may be any electronic device known in the prior art. In some embodiments, the electronic device may include, but without being limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

This application provides a lithium transition metal composite oxide, an electrochemical device, and an electronic device. The lithium transition metal composite oxide has a twin crystal structure. The twin crystal structure includes a first crystalline region and a second crystalline region. A grain boundary exists between the first crystalline region and the second crystalline region. The first crystalline region includes a first region located within 20 nm from the grain boundary. The second crystalline region includes a second region located within 20 nm from the grain boundary. An angle between a transition metal layer in the first region and a transition metal layer in the second region is 65° to 80°. By adjusting the angle between the transition metal layer in the first region and the transition metal layer in the second region to fall within 65° to 80°, it can reduce the stress and strain between the first crystalline region and the second crystalline region during charge-and-discharge processes, improve stability of the twin crystal structure, and in turn, improve the cycle performance of the electrochemical device at a high voltage.

### Embodiments

The implementations of this application are described below in more detail with reference to embodiments and comparative embodiments. Various tests and evaluations are performed in accordance with the following methods. In addition, unless otherwise specified, "part" and "%" are based on mass.

### Test methods and devices:

### Capacity retention rate test:

Charging a lithium-ion battery at a constant current of 0.2 C in a 25 °C environment until the voltage reaches an upper-limit voltage of 4.6 V, and then charging the battery at a constant voltage until the current drops below 50 µA. Subsequently, discharging the battery at a constant current of 0.2 C until the voltage finally reaches 3.0 V, and recording the first-cycle discharge capacity. Next, repeating the same steps for 100 charge-and-discharge cycles, and recording the 100^{th}-cycle discharge capacity. Capacity retention rate = (100^{th}-cycle discharge capacity/first-cycle discharge capacity) × 100%.

### Rate performance test:

Charging a lithium-ion battery at a constant current of 0.2 C in a 25 °C environment until the voltage reaches an upper-limit voltage of 4.6 V, and then charging the battery at a constant voltage until the current drops below 50 µA. Subsequently, discharging the battery at a constant current of 0.2 C until the voltage finally reaches 3.0 V, and recording the 0.2 C discharge capacity. Next, repeating the foregoing constant-current and constant-voltage charging process, and then discharging the battery at a constant current of 2 C until the voltage finally reaches 3.0 V, and recording the 2 C discharge capacity. Rate performance = (2 C discharge capacity/0.2 C discharge capacity) × 100%.

### The angle and the content of the element tests:

Fully discharging a lithium-ion battery at a current density of 10 mA/cm² until the voltage reaches 3.0 V, and leaving the battery to stand for 10 minutes. Subsequently, disassembling the battery in a glovebox to obtain a positive electrode plate. Moving the positive electrode plate into the chamber of a scanning electron microscope (model: FEI Vion Plasma FIB) equipped with a focused ion beam, in which the positive electrode plate is processed to obtain a specimen suitable for being analyzed in a scanning transmission electron microscope (STEM, model: FEI Titan3 G2 60-300), during which the surface of the specimen is protected with platinum (Pt) and the electrode plate is processed by using a Ga ion beam, with the specimen being not thicker than 100 nm. Cleaning the specimen in a low-voltage mode to remove the processing residues on the surface of specimen. Observing the specimen under a STEM. At an appropriate magnification, shooting a STEM image that contains lattice fringes of the first region in the first crystalline region and the second region in the second crystalline region. Measuring, by using image processing software, an angle between the lattice fringe in the first region and the lattice fringe in the second region at the grain boundary, that is, an angle between the transition metal layer in the first region and the transition metal layer in the second region after fully discharged. At the same time, collecting data by use of an X-ray energy dispersive spectrometry (EDS) function at an appropriate magnification to obtain the content of the element at the grain boundary of the positive active material and in the third region and the fourth region in the first region. Collecting data from at least 3 different positions, and averaging out the values to obtain a final result.

Taking a 1.4-cm diameter disk from the positive electrode plate, and assembling the disk with lithium metal to form a button battery. In the button battery, the electrolytic solution is a base electrolytic solution in Embodiment 1-1 below, and the amount of injected electrolytic solution is 50 µL. Charging one button battery until the voltage reaches 4.5 V and charging another button battery until the voltage reaches 4.7 V. Disassembling the button batteries, and measuring the angle between the transition metal layer in the first region and the transition metal layer in the second region of each button battery according to the foregoing steps, so that |β-α| can be calculated.

Testing the content of each element in the positive active material by using an inductively coupled plasma optical emission spectrometer.

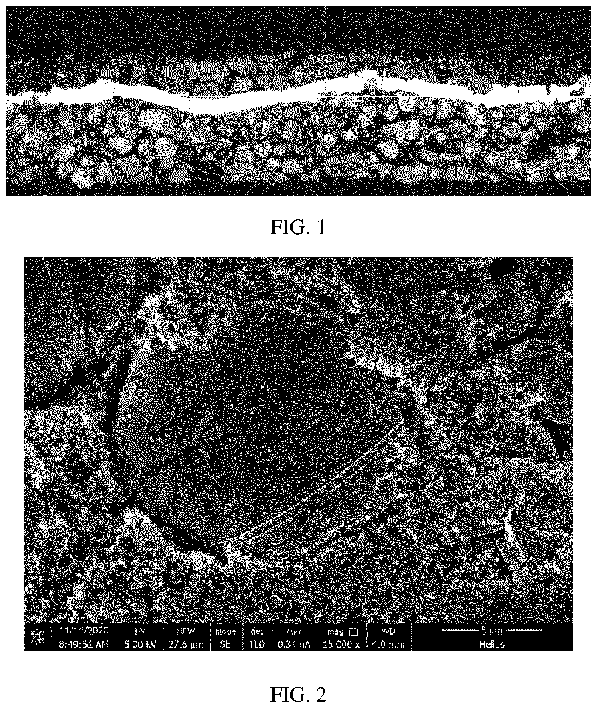

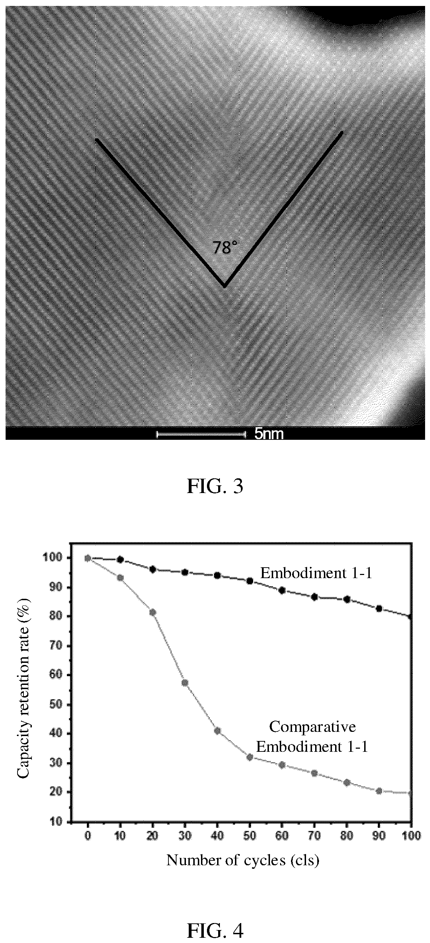

FIG. 1 is a scanning electron microscope image of a cross section of a positive electrode plate according to Embodiment 1-1. FIG. 2 is a scanning electron microscope image of a lithium transition metal composite oxide with a twin crystal structure in a cross section of a positive electrode plate according to Embodiment 1-1. As can be seen from the drawing, the positive active material contains lithium transition metal composite oxide particles with a twin crystal structure. FIG. 3 is a transmission electron microscope image of a lithium transition metal composite oxide obtained by charging a button battery until a voltage of 4.7 V, where the button battery is prepared by assembling lithium metal with a positive electrode plate obtained by disassembling an electrochemical device that is fully discharged according to Embodiment 1-1. The angle β between the transition metal layer in the first region and the transition metal layer in the second region is 78°.

### The thickness of the first layer test:

Observing a specimen under a STEM. At an appropriate magnification, shooting a STEM image of the first layer included at the edge of the particles. Selecting 5 measurement points randomly on the surface of the first layer. Measuring a minimum distance from each measurement point to the surface of the substrate by using the image processing software. Averaging out the measured values to obtain the thickness of the first layer.

### The number percent of particles test:

Selecting a 500-µm long region randomly in an image of a cross section of the positive electrode plate, and determining the number percent of the particles with a twin crystal structure in the positive active material based on the total number of particles of the positive active material, that is, the number percent of the particles with a twin crystal structure.

### The area percent of the second crystalline region test:

Observing a specimen under a STEM. Shooting a STEM image of a cross section of the specimen at an appropriate magnification. Calculating the area of the second crystalline region as S2 by using the image processing software. The total area of the cross section is S, and the area percent of the second crystalline region is S2/S.

### Embodiment 1-1

### <Preparing a positive active material>

(1) Mixing CoSO₄, MgSO₄, and Al(NO₃)₃ at a molar ratio of 98.2: 0.8: 1 between Co, Mg and Al to obtain an aqueous solution. Adding ammonia and ammonium carbonate, adjusting the pH to 8.5 or above, and obtaining a carbonate precipitate through a precipitation process. Baking the carbonate precipitate in a 60 °C oven, and controlling the water content of the carbonate precipitate to be not less than 7%. Subsequently, putting the carbonate precipitate into a muffle furnace, and performing a first calcination to the carbonate precipitate in an air atmosphere, where the calcination temperature T1 is 750 °C, the calcination duration t1 is 12 h, and the air flow speed is 10 L/min. Afterward, grinding and sifting the calcined product to obtain a first intermediate product.
(2) Mixing the first intermediate product with Li₂CO₃, putting the mixture into the muffle furnace, and performing a second calcination to the mixture in an air atmosphere, where the calcination temperature T2 is 1000 °C, the calcination duration t2 is 12 h, and the air flow speed is 10 L/min. Afterward, grinding and sifting the calcined product to obtain a second intermediate product. The ratio of the molar number of Li in Li₂Co₃ to the sum of the molar numbers of Co, Mg and Al is 1.05: 1.
(3) Mixing the second intermediate product with Al₂O₃ and MgO at a mass ratio of 100: 0.1: 0.05, putting the mixture into the muffle furnace, and performing a third calcination to the mixture in an air atmosphere, where the calcination temperature T3 is 600 °C, the calcination duration t3 is 8 h, and the air flow speed is 10 L/min. Afterward, grinding and sifting the calcined product to obtain a positive active material.

### <Preparing a positive electrode plate>

Mixing the positive active material, conductive carbon black as a conductive agent, polyvinylidene difluoride as a binder at a mass ratio of 97: 1.4: 1.6, adding N-methyl-pyrrolidone (NMP), and stirring the mixture well with a vacuum mixer to obtain a positive slurry, in which a solid content is 70%. Coating one surface of a positive current collector aluminum foil with the positive slurry evenly, and drying the current collector to obtain a positive electrode plate coated with a positive material layer on a single side. Repeating the foregoing steps on the other surface of the aluminum foil to obtain a positive electrode plate coated with the positive material layer on both sides. Subsequently, performing cold calendering and cutting to obtain a positive electrode plate.

### <Preparing a negative electrode plate>

Mixing artificial graphite as a negative active material, styrene butadiene rubber (SBR) as a binder, and sodium carboxymethyl cellulose as a thickener at a mass ratio of 97: 2: 1, adding deionized water, and stirring the mixture well with a vacuum mixer to obtain a negative slurry, in which a solid content is 75%. Coating one surface of a negative current collector copper foil with the negative slurry evenly, and drying the current collector to obtain a negative electrode plate coated with a negative material layer on a single side. Repeating the foregoing steps on the other surface of the copper foil to obtain a negative electrode plate coated with the negative material layer on both sides. Subsequently, performing cold calendering and cutting to obtain a negative electrode plate.

### <Preparing an electrolytic solution>

Mixing PC, EC, and DEC at a mass ratio of 1: 1: 1 in an dry argon atmosphere glovebox to obtain an organic solvent, adding a lithium salt LiPF₆ into the organic solvent to dissolve, and stirring the mixture well to obtain a base electrolytic solution. The mass percent of the LiPF₆ in the electrolytic solution is 12.5%.

### <Preparing a separator>

Using a 7-µm thick porous PE film as a separator.

### <Preparing a lithium-ion battery>

Stacking sequentially the positive electrode plate, the separator, and the negative electrode plate that are prepared above, and winding the stacked structure to obtain an electrode assembly. Putting the electrode assembly into an aluminum plastic film package, drying the packaged electrode assembly, and then injecting the electrolytic solution. Performing steps such as vacuum sealing, static standing, chemical formation, degassing, and edge trimming to obtain a lithium-ion battery.

### Embodiment 1-2

Identical to Embodiment 1-1 except: in step (1) of <Preparing a positive active material>, the molar ratio between Co, Mg, and Al is 97: 0.8: 2.2, the pH value is adjusted to 8.9 or above, and T1 is 780 °C; in step (2), T2 is 1050 °C, and t2 is 16 h; and in step (3), the mass ratio between the second intermediate product and Al₂O₃ and MgO is 100: 0.1: 0.5.

### Embodiment 1-3

Identical to Embodiment 1-1 except: in step (1) of <Preparing a positive active material>, the molar ratio between Co, Mg, and Al is 99: 0.3: 0.7, T1 is 550 °C, and t1 is 6 h; and in step (3), the mass ratio between the second intermediate product and Al₂O₃ and MgO is 100: 0.1: 0.5.

### Embodiment 2-1

Identical to Embodiment 1-1 except: in step (1) of <Preparing a positive active material>, the molar ratio between Co, Mg, and Al is 98.7: 0.3: 1; in the first calcination, MgO is added by a molar percent of 0.5% with respect to the moles of Co; and in step (3), the mass ratio between the second intermediate product and Al₂O₃ and MgO is 100: 0.1: 0.1.

### Embodiment 2-2

Identical to Embodiment 1-1 except: in step (1) of <Preparing a positive active material>, CoSO₄ and Al(NO₃)₃ are mixed at a molar ratio of 99: 1 between Co and Al to prepare an aqueous solution; in the first calcination, MgO is added by a molar percent of 0.8% with respect to the moles of Co; and in step (3), the mass ratio between the second intermediate product and Al₂O₃ and MgO is 100: 0.1: 0.15.

### Embodiment 2-3

Identical to Embodiment 1-1 except that, in step (1) of <Preparing a positive active material>, the molar ratio between Co, Mg, and Al is 98.5: 0.5: 1.

### Embodiment 2-4

Identical to Embodiment 1-1 except: in step (1) of <Preparing a positive active material>, CoSO₄ and TiO₂ are mixed at a molar ratio of 99.7: 0.3 between Co and Ti; and in step (3), the second intermediate product and TiO₂ are mixed at a mass ratio of 100: 0.05.

### Embodiment 2-5

Identical to Embodiment 1-1 except: in step (1) of <Preparing a positive active material>, CoSO₄ and Nb₂O₅ are mixed at a molar ratio of 99.7: 0.3 between Co and Nb; and in step (3), the second intermediate product and Nb₂O₅ are mixed at a mass ratio of 100: 0.01.

### Embodiment 2-6

Identical to Embodiment 1-1 except: in step (1) of <Preparing a positive active material>, CoSO₄ and ZnSO₄ are mixed at a molar ratio of 99.7: 0.3 between Co and Zn; and in step (3), the second intermediate product and ZnO are mixed at a mass ratio of 100: 0.01.

### Embodiment 2-7

Identical to Embodiment 1-1 except: in step (1) of <Preparing a positive active material>, CoSO₄ and NH₄F are mixed at a molar ratio of 99.7: 0.3 between Co and F; and in step (3), the second intermediate product and NH₄F are mixed at a mass ratio of 100: 0.01.

### Embodiment 2-8

Identical to Embodiment 1-1 except that, in step (1) of <Preparing a positive active material>, CoSO₄, MgSO₄, Al(NO₃)₃, and NH₄F are mixed at a molar ratio of 99.5: 0.1: 0.1: 0.3 between Co, Mg, Al, and F.

### Embodiment 3-1

Identical to Embodiment 1-1 except that, in step (2) of <Preparing a positive active material>, T2 is 950 °C, t2 is 6 h, and the air flow speed is 5 L/min.

### Embodiment 3-2

Identical to Embodiment 1-1 except that, in step (1) of <Preparing a positive active material>, T1 is 800 °C, and t1 is 18 h; and in step (2), T2 is 1050 °C, and the ratio of the molar number of Li in Li₂Co₃ to the sum of the molar numbers of Co, Mg, and Al is 1.06: 1.

### Embodiment 4-1

Identical to Embodiment 1-1 except that, in the step of <Preparing an electrolytic solution>, monofluoroethylene carbonate (FEC) is further added on the basis of the base electrolytic solution, and the mass percent of the FEC is 0.5% based on the total mass of the electrolytic solution.

### Embodiment 4-2

Identical to Embodiment 1-1 except that, in the step of <Preparing an electrolytic solution>, monofluoroethylene carbonate (FEC) and difluoroethylene carbonate (DFEC) are further added on the basis of the base electrolytic solution, and, based on the total mass of the electrolytic solution, the mass percent of the FEC is 2.5%, and the mass percent of the DFEC is 2.5%.

### Embodiment 4-3

Identical to Embodiment 1-1 except that, in the step of <Preparing an electrolytic solution>, monofluoroethylene carbonate (FEC) and difluoroethylene carbonate (DFEC) are further added on the basis of the base electrolytic solution, and, based on the total mass of the electrolytic solution, the mass percent of the FEC is 5%, and the mass percent of the DFEC is 5%.

### Comparative Embodiment 1-1

Identical to Embodiment 1-1 except that the positive active material is prepared according to the following steps:
(1) Mixing CoSO₄, MgSO₄, and Al(NO₃)₃ at a molar ratio of 98.2: 0.8: 1 between Co, Mg and Al to obtain an aqueous solution. Adding ammonia and ammonium carbonate, adjusting the pH to 8.0 or above, and obtaining a carbonate precipitate through a precipitation process. Baking the carbonate precipitate in a 60 °C oven, and controlling the water content of the carbonate precipitate to be not less than 7%. Subsequently, putting the carbonate precipitate into a muffle furnace, and performing a first calcination to the carbonate precipitate in an air atmosphere, where the calcination temperature T1 is 720 °C, the calcination duration t1 is 12 h, and the air flow speed is 10 L/min. Afterward, grinding and sifting the calcined product to obtain a first intermediate product.
(2) Mixing the first intermediate product with Li₂CO₃, putting the mixture into the muffle furnace, and performing a second calcination to the mixture in an air atmosphere, where the calcination temperature T2 is 950 °C, the calcination duration t2 is 12 h, and the air flow speed is 10 L/min. Afterward, grinding and sifting the calcined product to obtain a positive active material. The ratio of the molar number of Li in Li₂Co₃ to the sum of the molar numbers of Co, Mg, and Al is 1.05: 1.

### Comparative Embodiment 1-2

Identical to Embodiment 1-1 except that the positive active material is prepared according to the following steps:
(1) Mixing CoSO₄, MgSO₄, and Al(NO₃)₃ at a molar ratio of 98.2: 0.8: 1 between Co, Mg, and Al to obtain an aqueous solution. Adding ammonia and ammonium carbonate, adjusting the pH to 8.5 or above, and obtaining a carbonate precipitate through a precipitation process. Baking the carbonate precipitate in a 120 °C oven, and controlling the water content of the carbonate precipitate to be not less than 7%. Subsequently, putting the carbonate precipitate into a muffle furnace, and performing a first calcination to the carbonate precipitate in an air atmosphere, where the calcination temperature T1 is 950 °C, the calcination duration t1 is 8 h, and the air flow speed is 30 L/min. Afterward, grinding and sifting the calcined product to obtain a first intermediate product.
(2) Mixing the first intermediate product with LiOH, putting the mixture into the muffle furnace, and performing a second calcination to the mixture in an air atmosphere, where the calcination temperature T2 is 900 °C, the calcination duration t2 is 12 h, and the air flow speed is 30 L/min. Afterward, grinding and sifting the calcined product to obtain a positive active material. The ratio of the molar number of Li in LiOH to the sum of the molar numbers of Co, Mg, and Al is 1.05: 1.

Table 1 to Table 4 show the test results of the embodiments and comparative embodiments.

**Table 1**

| | Angle after fully discharged | 4.5 V angle α | 4.7 V angle β | \|β-α\| | Number percent of particles (%) | S2/S (%) | Capacity retention rate (%) | Rate performance (%) |
|---|---|---|---|---|---|---|---|---|
| Embodiment 1-1 | 74° | 75° | 78° | 3° | 55 | 45% | 80 | 93 |
| Embodiment 1-2 | 67° | 69° | 72° | 3° | 57 | 60% | 69 | 89 |
| Embodiment 1-3 | 80° | 81° | 86° | 5° | 53 | 30% | 62 | 86 |
| Comparative Embodiment 1-1 | 109° | 115° | 121° | 6° | 55 | 66% | 19.7 | 69 |
| Comparative Embodiment 1-2 | 60° | 62° | 64° | 2° | 49 | 43% | 21.2 | 68 |

As can be seen from Embodiments 1-1 to 1-3 versus Comparative Embodiments 1-1 and 1-2, when the angle of the lithium transition metal composite oxides falls within the range specified in this application, the cycle performance of the resulting lithium-ion batteries at a high voltage is higher than that of the lithium-ion batteries obtained in the comparative embodiments. As can be seen from FIG. 4, during cycling of the lithium-ion battery, the capacity retention rate of the lithium-ion battery in Embodiment 1-1 is always higher than that of the lithium-ion battery in Comparative Embodiment 1-1; and, after completion of 100 cycles, the capacity retention rate of the lithium-ion battery in Embodiment 1-1 is much higher than that of the lithium-ion battery in Comparative Embodiment 1-1. That is because, when the angle between the transition metal layer in the first region and the transition metal layer in the second region falls within the range specified above, the stress and strain between the first crystalline region and the second crystalline region during charge-and-discharge processes can be reduced, thereby improving stability of the twin crystal structure, and in turn, improving the cycle performance of the electrochemical device at a high voltage. As can be further seen from Embodiments 1-1 to 1-3 versus Comparative Embodiments 1-1 and 1-2, the value of |(β-α)|, that is, the difference between the angle obtained in a case of charging until a voltage of 4.7 V and the angle obtained in a case of charging until a voltage of 4.5 V, of the lithium transition metal composite oxide in Embodiments 1-1 to 1-3, is relatively low. This indicates that, for the lithium transition metal composite oxide in such embodiments, in a high-voltage section of a charge-and-discharge process, the strain between the first crystalline region and the second crystalline region is relatively low, and the stability of the twin crystal structure is relatively high.

As can be further seen from Table 1, the rate performance of Embodiments 1-1 to 1-3 is superior to that of Comparative Embodiments 1-1 and 1-2. That is because, when the angle between the transition metal layer of the first region and the transition metal layer of the second region falls within the range specified above, a potential energy barrier for transfer of lithium ions on this interface is lower, and the transfer impedance is lower, thereby improving the kinetic performance of the twin crystal structure, and in turn, improving the rate performance of the lithium-ion battery.

**Table 2**

| Embodiment | Element A | X (%) | Y (%) | X/Y | Capacity retention rate (%) |
|---|---|---|---|---|---|
| Embodiment 1-1 | Mg+Al | 1.90 | 0.95 | 2 | 80 |
| Embodiment 2-1 | Mg+Al | 1.94 | 0.50 | 3.9 | 85 |
| Embodiment 2-2 | Mg+Al | 1.89 | 0.28 | 6.7 | 84 |
| Embodiment 2-3 | Mg+Al | 2.5 | 1.0 | 2.5 | 81 |
| Embodiment 2-4 | Ti | 0.3 | 0.03 | 10 | 79 |
| Embodiment 2-5 | Nb | 0.3 | 0.025 | 12 | 80 |
| Embodiment 2-6 | Zn | 1.50 | 0.30 | 5 | 81 |
| Embodiment 2-7 | F | 0.3 | 0.03 | 10 | 82 |
| Embodiment 2-8 | Mg+Al+F | 0.3 | 0.03 | 10 | 86 |

As can be seen from Embodiment 1-1 and Embodiments 2-1 to 2-8, when X/Y is greater than or equal to 2, the resulting lithium-ion battery achieves high cycle performance. That is because, a relatively large amount of element A exists at a position close to the grain boundary in the first crystalline region, thereby further improving the structural stability at the position close to the grain boundary in the first crystalline region, reducing the risk of cracking of the twin crystal structure, and in turn, improving the structural stability of the lithium transition metal composite oxide at a high voltage. In addition, as can be seen that, when the element A contains element F, the resulting lithium-ion battery achieves higher cycle performance. That is because, when the element A contains F, on the one hand, a local disordered structure can be formed to disperse the stress, thereby reducing the risk of cracking of the twin crystal structure. On the other hand, the stability of the O structure at the grain boundary is improved, and the risk of deterioration at the grain boundary is reduced.

**Table 3**

| Embodiment | 4.7 V angle β | Number percent of particles (%) | Capacity retention rate (%) | Rate performance (%) |
|---|---|---|---|---|
| Embodiment 1-1 | 78 | 55 | 80 | 93 |
| Embodiment 3-1 | 78 | 36 | 70 | 86 |
| Embodiment 3-2 | 78 | 73 | 72 | 95 |

As can be seen from Embodiments 1-1, 3-1, and 3-2, when the number percent of particles with a twin crystal structure in the positive active material falls within the range specified in this application, the resulting lithium-ion battery achieves both high cycle performance and rate capability.

**Table 4**

| Embodiment | 4.7 V angle β | Thickness of first layer (nm) | Metal fluoride | Capacity retention rate (%) |
|---|---|---|---|---|
| Embodiment 1-1 | 78 | / | / | 80 |
| Embodiment 4-1 | 78 | 1.8 | MgF₂ | 83.5 |
| Embodiment 4-2 | 78 | 5.2 | MgF₂ | 87 |
| Embodiment 4-3 | 78 | 7.7 | MgF₂ | 86.6 |

As can be seen from Embodiment 1-1 and Embodiments 4-1 to 4-3, when the fluorocarbonate compound is further added into the electrolytic solution, the cycle performance of the lithium-ion battery at a high voltage is further improved. That is because, on the one hand, during the charge-and-discharge processes, the surface of the positive active material particles can react with the fluorocarbonate compound to form a metal fluoride protection layer, thereby improving the stability of the surface structure of the positive active material particles. On the other hand, the introduced fluorocarbonate compound can form a protection layer at an interface of cracking of the twin crystal structure, reduce the side reactions occurring between the lithium transition metal composite oxide and the electrolytic solution, and in turn, improve the cycle performance of the electrochemical device.

What is described above is merely preferred embodiments of this application, but is not intended to limit this application. Any modifications, equivalent substitutions, and improvements made without departing from the spirit and principles of this application still fall within the protection scope of this application.

## Claims

1. A lithium transition metal composite oxide, wherein the lithium transition metal composite oxide has a twin crystal structure, and the twin crystal structure comprises a first crystalline region and a second crystalline region, a grain boundary exists between the first crystalline region and the second crystalline region, the first crystalline region comprises a first region located within 20 nm from the grain boundary, and the second crystalline region comprises a second region located within 20 nm from the grain boundary, and an angle between a transition metal layer in the first region and a transition metal layer in the second region is 65° to 80°.

2. The lithium transition metal composite oxide according to claim 1, wherein the lithium transition metal composite oxide satisfies at least one of the following features:
(1) the transition metal layer in the first region comprises at least one of Co, Mn or Ni;
(2) the transition metal layer in the second region comprises at least one of Co, Mn or Ni; and
(3) the grain boundary contains an element A, and the element A comprises at least one of Mg, Al, Ti, Zr, La, Nb, Hf, Zn, Y or F.

3. The lithium transition metal composite oxide according to claim 2, wherein the first region comprises a third region located within 10 nm from the grain boundary and a fourth region located within 10 nm to 20 nm from the grain boundary; based on a total molar numbers of Co, Mn and Ni in the third region, a molar percent of the element A in the third region is X; and, based on a total molar number of Co, Mn and Ni in the fourth region, the molar percent of the element A in the fourth region is Y, and satisfying: X/Y ≥ 2.

4. The lithium transition metal composite oxide according to claim 3, wherein X is 0.2% to 2.5%.

5. The lithium transition metal composite oxide according to claim 1, wherein, in a cross section of the lithium transition metal composite oxide, an area percent of the second crystalline region is 30% to 60% based on an area of the cross section.

6. The lithium transition metal composite oxide according to claim 1, wherein the lithium transition metal composite oxide comprises a substrate and a first layer located on a surface of the substrate, and the first layer comprises a metal fluoride.

7. The lithium transition metal composite oxide according to claim 6, wherein the lithium transition metal composite oxide satisfies at least one of the following features:
(a) the metal fluoride comprises at least one of CoF₂, CoF₃, CoFO, MgF₂, NaF or AlF₃; and
(b) a thickness of the first layer is 1 nm to 8 nm.

8. An electrochemical device, comprising a positive electrode plate, wherein the positive electrode plate comprises a positive material layer, the positive material layer comprises a positive active material, and the positive active material comprises the lithium transition metal composite oxide according to any one of claims 1 to 7.

9. The electrochemical device according to claim 8, wherein the positive electrode plate is obtained by disassembling the electrochemical device that is fully discharged, two 1.4-cm diameter disks are taken from the positive electrode plate, the two disks are assembled with lithium metal to form a first button battery and a second button battery respectively, the first button battery is charged until a voltage reaches 4.5 V, and the second button battery is charged until the voltage reaches 4.7 V; in the first button battery, an angle in the lithium transition metal composite oxide is α; and, in the second button battery, an angle in the lithium transition metal composite oxide is β, and satisfying: |β - α| ≤ 5°.

10. The electrochemical device according to claim 9, wherein β is 70° to 86°.

11. The electrochemical device according to claim 8, wherein, based on a number of particles of the positive active material, a number percent of the particles with a twin crystal structure in the positive active material is 35% to 75%.

12. The electrochemical device according to claim 8, further comprising an electrolytic solution, wherein the electrolytic solution comprises a fluorocarbonate compound, and, based on a mass of the electrolytic solution, a mass percent of the fluorocarbonate compound is 0.05% to 15%.

13. The electrochemical device according to claim 12, wherein the fluorocarbonate compound comprises at least one of monofluoroethylene carbonate, difluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene carbonate, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate.

14. An electronic device, comprising the electrochemical device according to any one of claims 8 to 13.
